# EUROPEAN PATENT APPLICATION

(11) **EP 0 997 239 A2**
(43) Date of publication of application: **03.05.2000**
(21) Application number: 99308501.8
(22) Date of filing: 27.10.1999
(51) Int. Cl.: B25J 19/00, B25J 17/02, B25J 18/00

(54) **Structure of cable and/or pipe arrangement applied in parallel link mechanism**

(30) Priority: 27.10.1998 JP 32141898
(71) Applicant: Fanuc Ltd, Minamitsuru-gun, Yamanashi 401-0597 (JP)
(72) Inventor: Nihei, Ryo, Fujiyoshida-shi, Yamanashi, 403-0005 (JP); Uematsu, Masaaki, Koufu-shi, Yamanashi, 400-0851 (JP); Matsumoto, Kuniyasu, Minamitsuru-gun, Yamanashi, 401-0511 (JP); Abe, Kenichiro, Minamitsuru-gun, Yamanashi, 401-0511 (JP)
(74) Representative: Billington, Lawrence Emlyn

(57) **Abstract**

A structure of a cable and/or pipe arrangement for a parallel link mechanism where a fixed member 1 and a movable member 2 are provided, both of them are connected to each other by a plurality of link members 3 arranged in parallel, and the movable member 2 is moved relative to the fixed member 1 by driving the respective link members 3. A plurality of cables and/or pipes 10 led to the fixed member 1 from the outside of the parallel link mechanism are respectively bent away from the fixed member 1, the respective cables and/or pipes 10 being clamped by cable/pipe clamping means 20 provided on the fixed member 1 so as to maintain the cables and/or pipes 10 in their bent states. The respective cables and/or pipes 10 are connected to drive control devices 4a-4f for performing stretching/retracting operations of the respective link members 3 from the clamped positions of the cables and/or pipes 10.

## Description

The present invention relates to a structure of a cable and/or pipe arrangement applied in a parallel link mechanism used by an industrial robot, a burr remover, a machining center, a drill or the like effecting boring, or a YAG laser machine or the like effecting boring, welding or the like on a thin plate. These are merely examples of use.

A parallel link mechanism is well known where a fixed plate and a movable plate are connected to each other by a plurality of link members arranged in parallel, and the respective link members are extended/retracted in cooperating manner so that the movable plate is moved relative to the fixed plate. The links are arranged side-by-side, in parallel in the same sense that electrical components may be in parallel, as opposed to being in series. The links are not necessarily geometrically parallel to one another, and indeed in many cases they are not.

The parallel link mechanism can cause the movable plate to take any position and attitude relative to the fixed plate and can operate the movable plate with a high accuracy. Also, the respective link members can be arranged close to one another so that the parallel link mechanism can be structured compactly. Though the parallel link mechanism has the above advantages, it has a disadvantage in that there is less space utilized for a cable and/or pipe arrangement to drive control equipment provided for the parallel link mechanism or for a cable and/or pipe arrangement to an end effector mounted on the movable plate.

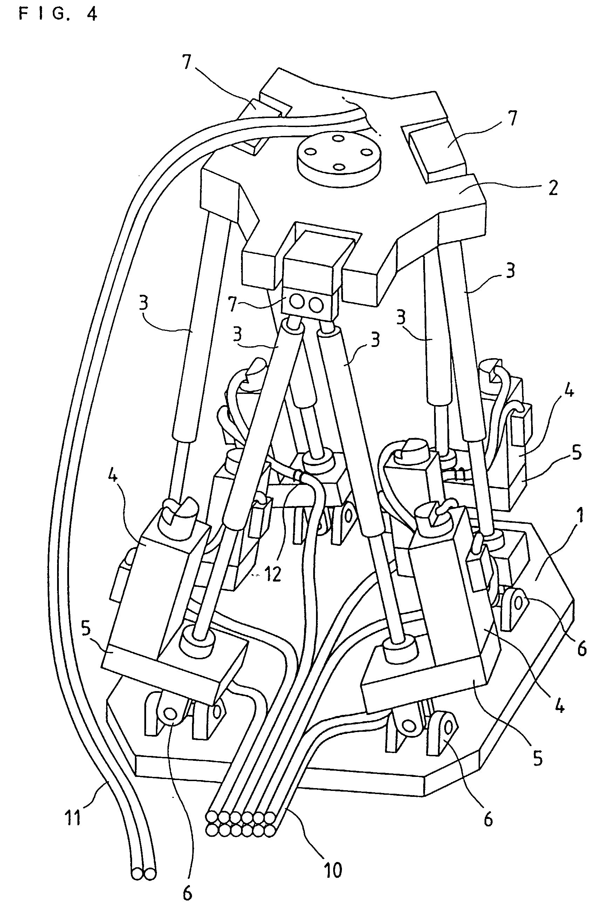

One example of a structure of a cable and/or pipe arrangement used in a conventional parallel link mechanism will herein be explained with reference to Fig. 4.

A parallel link mechanism comprises a fixed plate 1 serving as a supporting plate, a movable plate 2 mounted with such a device as an end effector, a hand, an additional shaft or the like, a plurality (6 in the example in Fig. 4) of stretchable/retractable link members 3 connecting the fixed plate 1 and the movable plate 2 to each other, converting means 5 provided for the respective link members 3 to stretch/retract them, and drive control devices 4 for respectively driving the link members 3 via the converting means 5.

Each converting means 5 comprises a ball nut (not shown) formed in a sleeve shape at one end of the link member 3 and a ball screw engaged with an inside of the ball nut in a threading manner, and it is a mechanism for converting rotating movement to linear movement. Each drive control device 4 for driving the converting means 5 to stretch/retract the link member 3 comprises a servomotor (not shown) and a position/speed detector mounted on the servomotor or the like. The ball screws are individually rotated by the servomotors respectively constituting the drive control devices 4 so that substantial lengths of the respective link members 3 can individually be changed.

Also, joints 6 for supporting the respective lower end portions of the respective link members 3 are disposed on the fixed plate 1 via the respective converting means 5. Meanwhile, joints 7 for coupling upper ends of adjacent two link members 3 to each other are disposed one by one at positions of apexes of regular triangles assumed on the movable plate 2.

Each joint 6 disposed on the fixed plate 1 constitutes an articulate having the degree of freedom of 2 and it allows pivoting movement of each link member 3 relative to the fixed plate 1 in all directions. On the other hand, each joint 7 disposed on the movable plate 2 constitutes an articulate having the degree of freedom of 2 or 3 and it allows pivoting movement of the link member 3 relative to the movable plate 2.

Cables 10 are respectively connected to the servomotors respectively constituting the drive control devices 4 for driving the respective link members 3 and the position/speed detectors respectively mounted on the servomotors. As illustrated in Fig. 4, the cables 10 reach the fixed plate 1 from the outside of the parallel link mechanism and therefrom extend to the servomotors or the position/speed detectors. The cables 10 are respectively fixed by fixtures on members on which the servomotors are respectively mounted.

Cables 11 are connected to a device (not shown) mounted on the movable plate 2, for example an end effector. The cables 11 go around the outside of the parallel link mechanism to the device.

In the parallel link mechanism thus structured, all of the (six) link members 3 are stretched/retracted synchronously in order to move the movable plate 2 to approach to/separate from the fixed plate 1 while the relative attitude of the movable plate 2 to the fixed plate 1 is maintained. On the other hand, in order to change the relative attitude of the movable plate 2 to the fixed plate 1, a pair of link members 3 whose upper ends together are connected to one of the joints 7 are stretched/retracted in cooperation with the other pairs of link members 3.

Also, in order to rotate the movable plate 2 relative to the fixed plate 1, operations where one link member 3 of one pair of link members 3 whose upper ends together are connected to one of the joints 7 is stretched or retracted relative to the other link member 3 is synchronously performed for all of the pairs of link members 3. According to these operations the movable plate 2 is rotated around its center in a clockwise or counterclockwise direction.

As mentioned above, when the relative position, attitude or rotation amount of the movable plate 2 to the fixed plate 1 is changed, the link members 3 of the parallel link mechanism are pivoted or swung. In association with pivotings of the link members 3, the drive control devices 4 for respectively driving the link members 3 are also pivoted. As a result, the cables 10 connected to the servomotors constituting the drive control devices 4 and the position/speed detectors are also moved. There may occur that the cables 10 come in contact with the fixed plate 1 to be rubbed according to their movements and covers thereof are torn so that they are short-circuited or broken.

Meanwhile, it is considered that the cables 10 are disposed with such plays that they can follow change in position or attitude of the movable plate 2 so as not to contact with the fixed plate 1 even when the cables 10 are moved. However, it is difficult to provide a space for allowing such plays of the cables 10 on the fixed plate 1 (namely, inside the parallel link mechanism).

On the other hand, since the cables 11 connected to the device mounted on the movable plate 2 go around the outside of the parallel link mechanism to the device, large plays must be prepared for the cables 11 in order to accommodate change in position and/or attitude of the movable plate 2. As a result, there are drawbacks that arrangement of devices around the parallel link mechanism is restricted and that an operation region of the parallel link mechanism is limited to a small region.

An object of the present invention is to provide a parallel link mechanism with a cable and/or pipe arrangement so as to avoid cables and/or pipes used in the parallel link mechanism from coming into contact with members constituting the parallel link mechanism to be rubbed, and so as not to prevent peripheral devices from being disposed around the parallel link mechanism.

An aspect of the present invention is a structure of a cable and/or pipe arrangement for a parallel link mechanism where a fixed member and a movable member are provided, both of them are connected to each other by a plurality of link members arranged in parallel, and the movable member is moved relative to the fixed plate by driving the respective link members, wherein a plurality of cables and/or pipes led to the fixed member from the outside of the parallel link mechanism are respectively bent so as to be spaced from the fixed member, the respective cables and/or pipes are clamped by cable/pipe clamping means provide on the fixed member so as to maintain the cables and/or pipes in their bent states, and the respective cables and/or pipes are connected to drive control devices for performing stretching/retracting operations of the respective link members from the clamped positions of the cables and/or pipes.

Another aspect of the invention is a structure of a cable and/or pipe arrangement for a parallel link mechanism where a fixed member and a movable member are provided, both of them are connected to each other by a plurality of link members arranged in parallel, and the movable member is moved relative to the fixed plate by driving the respective link members, wherein a through hole is formed in the movable member, a cable and/or a pipe connected to a device mounted on the movable member is caused to pass through the through hole, and the cable and/or a pipe is drawn in a space between the fixed member and the movable member. Further aspects are provided by attached claims 3 and 5.

The cables and/or pipes connected to the drive control devices for driving the parallel link mechanism are disposed with plays in a space between the movable member and the fixed member. Accordingly, the cables and/or pipes are prevented from coming into contact with another member to be rubbed and injured even when the movable member is operated in a complicated manner. Furthermore, the cables and/or pipes are disposed with a play in the space between the movable member and the fixed member. Therefore, there is not such a drawback that the cables and/or pipes come into contact with another member to be rubbed and injured. In addition, there is not such a drawback that it is necessary to restrain arrangement of peripheral devices and operation of the parallel link mechanism.

### BRIEF DESCRIPTION OF THE DRAWINGS

The foregoing and other features of embodiments of the invention will become apparent from the following description of preferred embodiments of the invention with reference to the accompanying drawings, in which:
Fig. 1 is a perspective view of a parallel link mechanism provided with a structure of a cable and/or pipe arrangement according to a first embodiment of the present invention;
Fig. 2 is a perspective view of a clamping member different from a clamping member used in the structure of a cable and/or pipe arrangement in Fig. 1;
Fig. 3 is a perspective view of a parallel link mechanism provided with a structure of a cable and/or pipe arrangement according to a second embodiment of the present invention; and
Fig. 4 is a perspective view of a parallel link mechanism provided with a structure of a cable and/or pipe arrangement according to a conventional example.

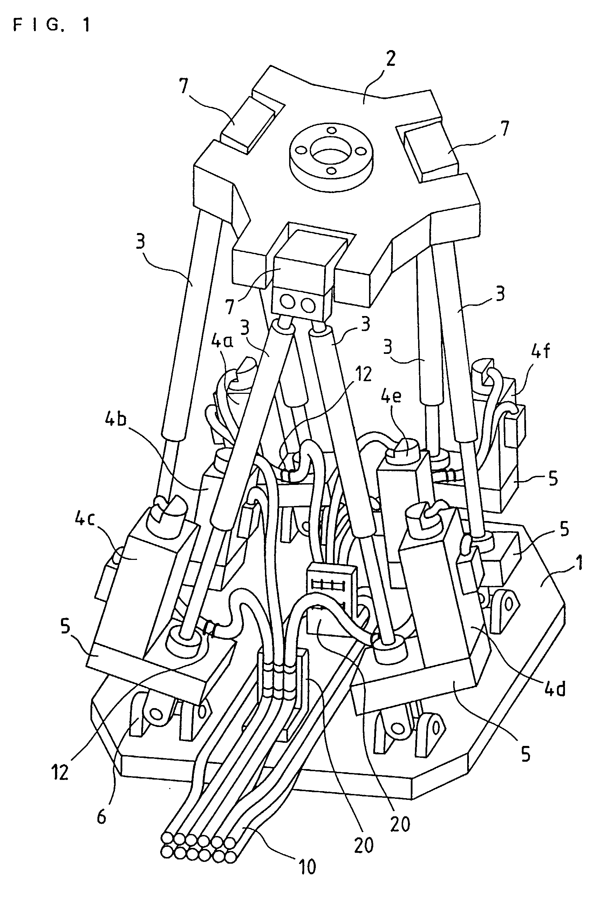

A structure of a cable and/or pipe (which is hereinafter referred simply to as "a cable or cables") arrangement used in a parallel link mechanism according to a first embodiment will be explained with reference to Fig. 1.

Since the parallel link mechanism illustrated in Fig. 1 has the same structure as that of a parallel link mechanism illustrated in Fig. 4, explanation of its structure and operation will be omitted. In Fig. 1, the same elements as those illustrated in Fig. 4 are denoted by the same reference numerals. Incidentally, in Fig. 1 servomotors constituting six drive control devices 4 are denoted by reference numerals 4a, 4b, 4c, 4d, 4e and 4f.

The structure of the cable arrangement shown in Fig. 1 is different from the conventional art shown in Fig. 4 in that cable clamping members 20 are fixed on a fixed plate 1 (fixed member) and portions of the cables connected to the respective servomotors 4a to 4f and position/speed detectors mounted on the respective servomotors 4a to 4f are clamped by the cable clamping members 20.

Specifically, each clamping member 20 comprises an L-shaped structure having two flat surfaces bent to each other at an angle of about 90°. In the clamping member 20, one of the flat faces serves as a mounting surface which is mounted on the fixed plate 1 and the other flat face serves as a cable fixing face on which the cables 10 is fixed. In the example shown in Fig. 1, two sets of the cable clamping members 20 are used, and the cables 10 are distributed to the respective servomotors 4a to 4f via the two cable clamping members 20.

In the example shown in Fig. 1, some of a plurality of cables 10 grouped in one and extended from a position outside of the parallel link mechanism up to the fixed plate 1 are bent approximately vertically by one of the cable clamping members 20 to advance towards some of the servomotors 4a to 4f and position/speed detectors mounted on the servomotors, while some of the cables 10 are bent approximately vertically by the other cable clamping member 20 to advance towards other some servomotors of the servomotors 4a to 4f and position/speed detectors mounted on the other servomotors.

A portion of each cable 10 bent approximately vertically to the mounting face of the fixed plate 1 by the cable clamping member 20 towards a movable plate 2 (movable member) is clamped on the cable fixing face of the cable clamping member 20.

Incidentally, a section of each cable 10 extending from its portion clamped by the cable clamping member 20 to its portion connected to one of the servomotors 4a to 4f and the position/speed detectors is given a play or margin to such an extent that shift of the positions of these servomotors 4a to 4f according to change in position and/or attitude of the movable plate 2 is not prevented.

Since the cable 10 is flexible and has a rigidity to some extent, the section of the cable 10 extending from the portion clamped by the cable clamping member 20 to the portion connected to one of the servomotors 4a to 4f and the position/speed detectors takes a shape where an arc is drawn in a space between the fixed plate 1 and the movable plate 2.

In the example illustrated in Fig. 1, the sections of the cables 10 extending from their portions clamped by the cable clamping members 20 to the portion connected to the servomotors 4a, 4c, 4d and 4f and the position/speed detectors mounted on the servomotors 4a, 4c, 4d and 4f are fixed at their portions on mounting members of the servomotors through fixtures 12. On the other hand, the sections of the cables 10 extending from their portions clamped by the cable clamping members 20 to their portions connected to the servomotors 4b and 4e and the position/speed detectors mounted on the servomotors 4b and 4e need not be fixed at any members including the mounting members of the servomotors.

As described above, since the cables 10 respectively have the portions clamped by the cable clamping member 20 to extend vertically to the mounting face of the fixed plate 1 towards the movable member 2 and the portions continuous thereto and drawing an arc in a space, there is no drawback in which they will come into contact with the fixed plate 1 even when the servomotors 4a to 4f are swung or pivoted relative to the fixed plate 1 according to operation of the parallel link mechanism so that they change their attitudes. Accordingly, it can be prevented that the cables 10 come into contact with the parallel link mechanism so that covers of the cables 10 are broken and the cables 10 are short-circuited.

Incidentally, even in a case where the cables 10 are fixed on the mounting members of the servomotors by the fixtures 12, position relationships between cable mounting positions on the mounting members of the servomotors and the servomotors or the position/speed detectors are not varied even when the positions of the servomotors are changed. Therefore, there do not occur relative movements between, on one hand, the cables 10, and, on the other hand, the servomotors, the position/speed detectors and the servomotor mounting members, and the sections of the cables 10 between the cable mounting positions and the servomotors or the position/speed detectors are not rubbed.

In the above embodiment, as shown in Fig. 1, two cable clamping members 20 are employed, but only one cable clamping member may be employed.

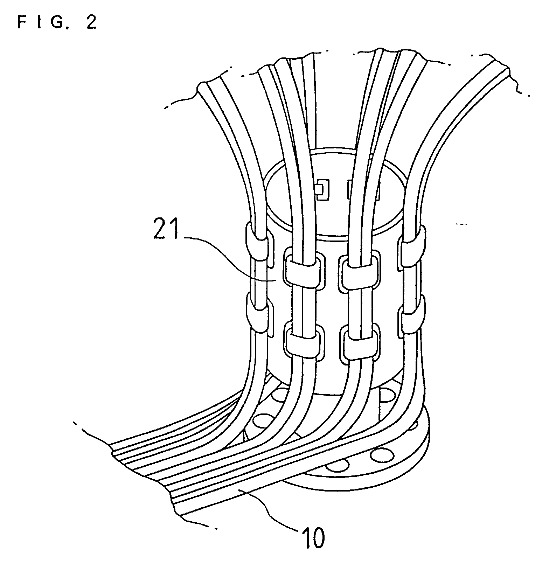

Next, a structure of a cable arrangement used in a parallel link mechanism according to a second embodiment of the present invention will be explained with reference to Fig. 2.

In the first embodiment explained above, as illustrated in Fig. 1, the cable clamping member 20 serving as the structure of a cable arrangement is constituted by an L-shaped structure having two flat faces bent to each other at an angle of about 90, but another cable clamping member having a different structure from that of the first embodiment is employed in the second embodiment. The second embodiment will be explained with reference to Fig. 2 below.

A cable clamping member 21 serving as the structure of a cable arrangement shown in Fig. 2 comprises a cylindrical structure formed at its one end with a flange portion. The cable clamping member 21 is fixed at an almost central portion of the fixed plate 1 in a state where an end face of the flange portion comes into contact with a face of the fixed plate 1.

A plurality of cables 10 extending as a group from a position outside the parallel link mechanism on to the fixed plate 1 are clamped on a cylindrical portion peripheral surface (that is, a cable fixing surface) of the cable clamping member 21 to be bent approximately vertically, as shown in Fig. 2. The cables 10 bent by cable clamping member 21 further extend upward towards the movable plate 2, (namely, extend approximately along an axial direction of the cylindrical portion of the cable clamping member 21), they each are bent in an arc shape in a space between the fixed plate 1 and the movable plate 2 and thereafter respectively reach the servomotors 4a to 4f and the position/speed detectors.

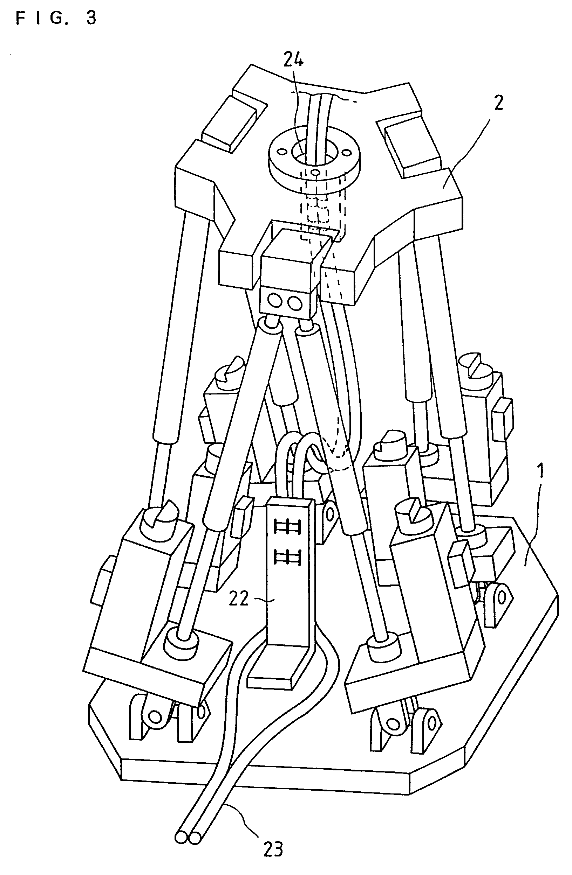

Further, a structure of a cable arrangement used in the parallel link mechanism according to a third embodiment of the present invention will be explained with reference to Fig. 3.

Cables 23 illustrated in Fig. 3 are connected to such a device (not shown) as an end effector, a hand, an additional shaft or the like.

A through hole 24 is formed in a central portion of the movable plate 2. A cable clamping member 22 is fixed on an approximately central portion of the fixed plate 1. The cable clamping member 22 has an L-shaped structure having two flat faces (one is a mounting face which is mounted on the fixed plate 1 and the other is a fixing face which is fixed with the cables 10) bent at an angle of about 90° like the cable clamping member 20 shown in Fig. 1. Incidentally, the cable clamping member 22 is formed taller than the cable clamping member 20 shown in Fig. 1.

A plurality of the cables 23 (two in Fig. 3) extending as a group from a position outside the parallel link mechanism on to the fixed plate 1 are fixed on a cable fixing face of the cable clamping member 22 to be bent approximately vertically and upwardly toward the movable plate 2. Thereafter, the cables pass through the through hole 24 formed in the central portion of the movable plate to be connected to the device mounted on the movable plate 2.

A section of each cables 23 extending from its portion clamped by the cable clamping member 22 to its portion passing through the through hole 24 of the movable plate 2 is disposed with a play in a space between the fixed plate 1 and the movable plate 2.

Accordingly, even when the position and/or attitude of the movable plate 2 is changed, the cables 23 are prevented from contacting with other members. As a result, there is no drawback in which the cables 23 are rubbed to be broken due to contact of the cables 23 with other members.

The cables 11 shown in Fig. 4 go around the outside of the parallel link mechanism to reach the device mounted on the movable plate 2. In this embodiment, however, the cables 23 pass through the inside of the parallel link mechanism to reach the device mounted on the movable plate 2. Accordingly, in this embodiment, arrangement of peripheral devices and operation area of the parallel link mechanism is not restricted due to the arrangement of the cables 23.

In the above, two embodiments of the structure of an arrangement of the cables 10 connected to a drive control device provided in a parallel link mechanism have been explained with reference to Figs. 1 and 2, and the structure of an arrangement of the cables 23 connected to a device mounted on the movable plate 2 has been explained with reference to Fig. 3. Meanwhile, it is possible that, regarding one parallel link mechanism, the first or second embodiment is employed for the structure of an arrangement of the cables 10 connected to a drive control device and, in addition thereto, the third embodiment is employed for the structure of an arrangement of the cables 23 connected to a device mounted on the movable plate 2.

Accordingly, first and second groups of cables drawn in from outside of the parallel link mechanism on to the fixed plate are clamped on the cable clamping member to be bent at an angle of about 90° and are extended upwardly towards the movable plate. Then, the first group of cables are respectively connected to servomotors for driving the parallel link mechanism, while the second group of cables are caused to pass through a central through hole of the movable plate to be connected to a device mounted on the movable plate. As the cables are arranged in the above manner, they are prevented from coming into contact with another member, and it becomes unnecessary for the cables to go around an outer periphery of the parallel link mechanism.

## Claims

1. A structure of a cable and/or pipe arrangement for a parallel link mechanism where a fixed member and a movable member are provided, both of them are connected to each other by a plurality of link members arranged in parallel, and the movable member is moved relative to the fixed member by driving the respective link members,
wherein a plurality of cables and/or pipes led to the fixed member from the outside of the parallel link mechanism are respectively bent away from the fixed member, the respective cables and/or pipes are clamped by cable/pipe clamping means provided on the fixed member so as to maintain the cables and/or pipes in their bent states, and the respective cables and/or pipes are connected to drive control devices for performing stretching/retracting operations of the respective link members from the clamped positions of the cables and/or pipes.

2. A structure of a cable and/or pipe arrangement for a parallel link mechanism where a fixed member and a movable member are provided, both of them are connected to each other by a plurality of link members arranged in parallel, and the movable member is moved relative to the fixed member by driving the respective link members,
wherein a through hole is formed in the movable member, a cable and/or a pipe connected to a device mounted on the movable member is caused to pass through the through hole, and the cable and/or a pipe is drawn in a space between the fixed member and the movable member.

3. A structure of a cable and/or pipe arrangement for a parallel link mechanism where a fixed member and a movable member are provided, both of them are connected to each other by a plurality of link members arranged in parallel, and the movable member is moved relative to the fixed member by driving the respective link members,
wherein a plurality of first cables and/or pipes led to the fixed member from the outside of the parallel link mechanism are respectively bent away from the fixed member, the respective cables and/or pipes are clamped by cable/pipe clamping means provided on the fixed member so as to maintain the first cables and/or pipes in their bent states, and the respective first cables and/or pipes are connected to drive control devices for performing stretching/retracting operations of the respective link members from the clamped positions of the first cables and/or pipes, and
wherein a through hole is formed in the movable member, a second cable and/or a pipe connected to a device mounted on the movable member is caused to pass through the through hole, and the second cable and/or a pipe is drawn in a space between the fixed member and the movable member.

4. A structure of a cable and/or pipe arrangement for a parallel link mechanism according to any preceding claim, wherein said cables and/or pipe are drawn in from a position outside the parallel link mechanism on to the fixed member.

5. A parallel link mechanism where a fixed plate and a movable plate are connected to each other by a plurality of link members arranged in parallel, and the relative position and/or attitude of the movable plate relative to the fixed plate is changed by driving the respective link members by means of driving motors coupled to the link members via power transmitting means,
wherein at least one cable clamping member is fixed on at an approximately central portion of the fixed plate,
the cable clamping member has a mounting face which comes into contact with a face of the fixed plate and a cable fixing face for bending cables or pipes upward, and a clamping member for fixing these cables or pipes, which are arranged in a vertical direction to the mounting face of the fixed plate, on the cable fixing face.

6. A parallel link mechanism according to any preceding claim, wherein the or each cable clamping member has an L-shaped structure.

7. A parallel link mechanism according to any of claims 1 to 5, wherein the or each cable clamping member comprises a cylindrical member provided at its one end with a flange, and a lower face of the flange constitutes the mounting face and an outer peripheral face of the cylindrical member constitutes the cable fixing face.

8. A parallel link mechanism according to claim 5, or claim 6 or 7 appended to claim 5, wherein a clamping member for fixing a cable or pipe on a portion of a member constituting one of the power transmitting means and the driving motor is provided on the member constituting one of the power transmitting means and the driving motor.

9. A parallel link mechanism according to claim 5, or claim 6, 7 or 8 appended to claim 5, wherein at least some of the cables are for supplying power to the driving motors.

10. A parallel link mechanism according to claim 5, or claim 6, 7, 8 or 9 appended to claim 5, wherein at least some of the cables are for taking out signals from position/speed detectors mounted on the driving motors.

11. A parallel link mechanism according to claim 5, or claim 6, 7, 8, 9 or 10 appended to claim 5, wherein at least some of the cables are connected to terminals of a device mounted on the movable plate.
